**Europäisches Patentamt**

**European Patent Office**

**Office européen des brevets**

(11) Veröffentlichungsnummer: **0 248 982**
**A1**

(12) **EUROPÄISCHE PATENTANMELDUNG**

(21) Anmeldenummer: **87103801.4**

(22) Anmeldetag: **16.03.87**

(51) Int. Cl.⁴: **B01D 46/04**

(30) Priorität: **28.05.86 DE 3618020**

(43) Veröffentlichungstag der Anmeldung:
**16.12.87 Patentblatt 87/51**

(84) Benannte Vertragsstaaten:
**BE FR GB IT NL SE**

(71) Anmelder: **WALTHER & CIE.**
**AKTIENGESELLSCHAFT**
**Waltherstrasse 51**
**D-5000 Köln 80 (Dellbrück)(DE)**

(72) Erfinder: **Frank, Werner J., Ing.-grad.**
**Goldbornstrasse 92**
**D-5060 Bergisch-Gladbach 2(DE)**

(54) **Staubgasfilter.**

㊼ Die Erfindung betrifft ein Staubgasfilter mit reihenförmig in einem Gehäuse angeordneten Filterschläuchen, denen Einrichtungen für eine Rückspülung zwecks Reinigung zugeordnet sind. Die hierzu erforderlichen Düsen in den Blasrohren werden durch einen Treibvorgang mittels eines Stempeldornes in einem Arbeitsgang hergestellt.

Fig.1

**EP 0 248 982 A1**

# STAUBGASFILTER

Die Erfindung betrifft einen Straubgasfilter mit reihenförmig in einem Gehäuse angeordneten Filterschläuchen, deren obere offene Enden in einem Schlauchboden gehalten sind und bei dem jeder Schlauchreihe zur stoßartigen Druckluftabreinigung ein von einem Sammelrohr ausgehendes Blasrohr zugeordnet ist mit in Richtung der Längsachse eines jeden Schlauches weisender Düsenöffnung.

Bei derartigen Staubgasfiltern werden die Filterschläuche durch eine stoßartige Luftströmung abgereinigt. Zu diesem Zweck sind Staubgasfilter in den verschiedensten Ausführungen bekannt geworden.

So hat man beispielsweise die Düsenöffnungen in den Blasrohren durch einfache Bohrungen (DE-OS 31 11 502) oder durch zylinderförmige Rohransätze (DE-OS 27 59 220) gebildet. In allen Fällen ist ein gerichteter Luftstrahl einer Luftrückströmung erwünscht, der jedoch durch die einfachen Bohrungen nicht gewährleistet ist. Bei den zylinderförmigen Rohransätzen ist mit größeren Ausströmverlusten zu rechnen.

Der Erfindung liegt die Aufgabe zugrunde, einen Staubgasfilter mit Blasrohr zur Abreinigung der Filterschläuche zu schaffen, bei dem die jeweiligen Düsen einen gerichteten Luftstrahl mit geringstmöglichen Ausströmverlusten gewährleisten und außerdem die Blasrohre mit den Düsen eine einfache Werkstattfertigung zulassen.

Diese Aufgabe wird dadurch gelöst, daß in den Blasrohren oberhalb jeder Düsenöffnung eine weitere Öffnung mit einem Verschluß vorgesehen ist. Ein derartiges Blasrohr läßt sich in einem Arbeitsgang mit einer einfachen Stanzform in ein Düsenrohr verwandeln. Ein bevorzugtes Herstellungsverfahren ist darin zu sehen, daß im Bereich der Filterschläuche durch die Blasrohre in einem Arbeitsgang ein jeweils eine obere und eine untere Öffnung bildender Stempeldorn getrieben wird, der an der oberen Öffnung einen nach innen gerichteten Kragen und an der unteren Öffnung einen nach außen gerichtete Düse formt. Wird der Bereich der unteren Öffnung vor dem Treiben des Stempeldornes örtlich erhitzt, so kann hierdurch die Form der Düse beeinflußt werden. Die während des Treibvorganges sich bildende düsenartige Ausströmöffnung garantiert einen gerichteten Luftstrom bei geringsten Ausströmverlusten.

Ein Ausführungsbeispiel der Erfindung ist in der Zeichnung dargestellt und wird nachfolgend näher beschrieben. Es zeigt:

Fig. 1 einen Querschnitt durch ein Staubgasfilter,

Fig. 2 eine Draufsicht mit Teilschnitt,

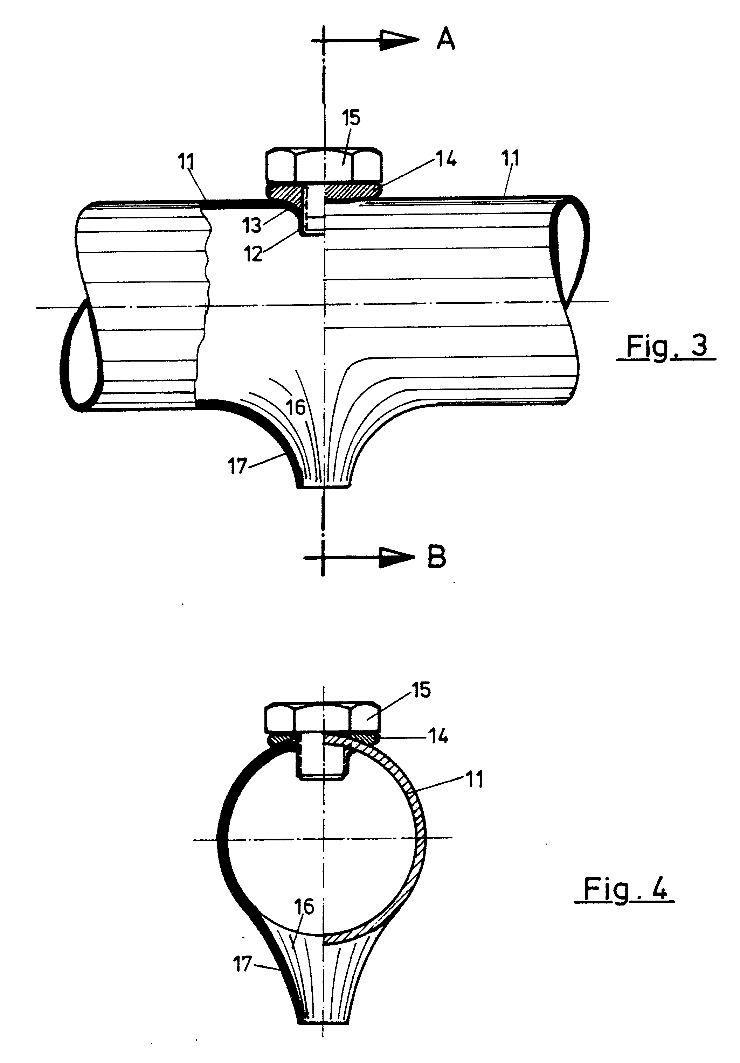

Fig. 3 eine vergrößerte Darstellung eines Teiles des Blasrohres im Bereich der Öffnungen, wobei die linke Hälfte im Schnitt und die rechte Hälfte in Ansicht dargestellt ist,

Fig 4. einen Schnitt gemäß Linie A-B in Fig. 1, wobei auch hier die linke Hälfte im Schnitt durch die Öffnungen und die rechte Hälfte außerhalb der Öffnungen im Schnitt dargestellt ist.

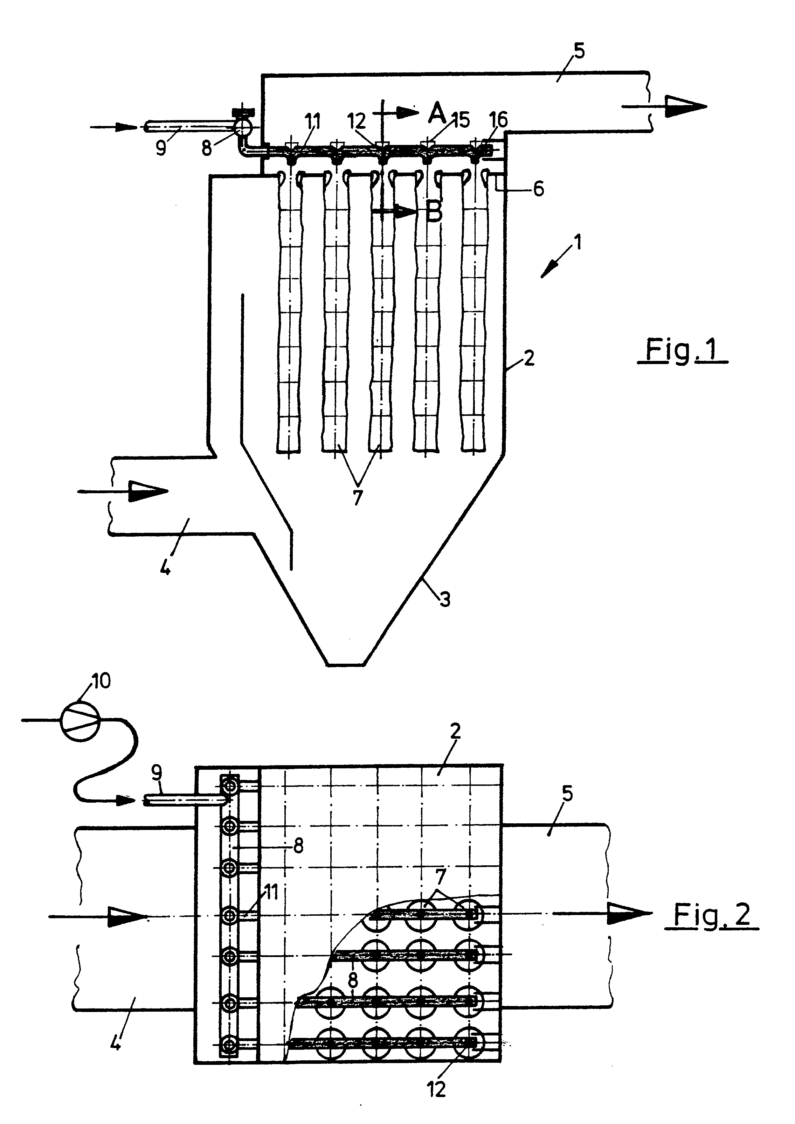

Das Staubgasfilter 1 besteht aus einem Filtergehäuse 2 mit einem darunter angeordneten Staubbunker 3, sowie einem Rohgas-Eintrittskanal 4 und einem Reingas-Austrittskanal 5. Im oberen Teil des Filtergehäuses 2 ist ein Schlauchboden 6 angeordnet, in dem die Filterschläuche 7 befestigt sind. Die Filterschläuche sind reihenförmig angeordnet, wie dem Teilschnitt in Fig. 2 zu entnehmen ist. Jeder Filterreihe ist ein Basrohr 8 zugeordnet, die außerhalb des Reingaskanales 5 in einem Sammelrohr 8 münden. In dieses Sammelrohr ist eine mit einem Kompressor 10 versehene Luftzufuhrleitung 9 eingeführt.

Zur Herstellung der unteren Düsenöffnung 16, 17 wird ein nicht dargestellter Stempeldorn von oben durch das Blas rohr 11 hindurchgetrieben, so daß sich einerseits eine obere Öffnung 12 mit einem nach innen gerichteten Kragen 13 und eine untere Öffnung 16 mit nach außen weisender Düse 17 bilden. Wird das Blasrohr 11 im unteren Bereich vor dem Treibvorgang erhitzt, so kann hierdurch die später gewünschte Düsenform 17 vorbestimmt werden. Die obere Öffnung 12 ist durch eine Blechtreibschraube 15 mit einer zwischengelegten Weichdichtung verschlossen.

Es gehört zum Wesen der Erfindung, vor dem Treibvorgang kleinere Führungsbohrungen für die Öffnungen 12 und 16 vorzusehen, erforderlich sind sie jedoch nicht. Sie erleichtern nur das Stanzen der einzelnen Löscher. Die obere Öffnung, die nur zur einfacheren Herstellung der unteren Düsenöffnung vorgesehen wird, muß anschließend wieder abgedichtet werden. Außer der beschriebenen Blechtreibschraube können andere Verschlußelemente, beispielsweise Schweißstopfen oder dergl. verwendet werden.

## Ansprüche

1. Staubgasfilter mit reihenförmig in einem Gehäuse angeordneten Filterschläuchen, deren obere offene Enden in einem Schlauchboden gehalten sind und bei dem jeder Schlauchreihe zur stoßartigen Druckluftabreinigung ein von einem Sammelrohr augehendes Blasrohr zugeordnet ist, mit in Richtung der Längsachse eines jeden Schlauches weisender Düsenöffnung, dadurch gekennzeichnet, daß oberhalb jeder Düsenöffnung (16) eine weitere Öffnung (12) mit einem Verschluß vorgesehen ist.

2. Staubgasfilter nach Anspruch 1, dadurch gekennzeichnet, daß als Verschluß eine Blechtreibschraube (15) vorgesehen ist.

3. Staubgasfilter nach Anspruch 1, dadurch gekennzeichnet, daß als Verschluß ein Einschweißstopfen vorgesehen ist.

4. Staubgasfilter nach den Ansprüchen 1 bis 3, dadurch gekennzeichnet, daß zwischen der Blechreibschraube (15) und dem Kragen (13) eine Weichdichtung (14) angeordnet ist.

5. Verfahren zum Herstellen der Düsenöffnungen nach AnSpruch 1, dadurch gekennzeichnet, daß im Bereich der Filterschläuche (11) durch die Blasrohre (11) in einem Arbeitsgang ein jeweils eine obere (12) und eine untere Öffnung (16) bildender Stempeldorn getrieben wird, der an der oberen Öffnung (12) einen nach innen gerichteten Kragen (13) und an der unteren Öffnung (16) eine nach außen gerichtete Düse (17) formt.

6. Verfahren nach Anspruch 5, dadurch gekennzeichnet, daß der Bereich der unteren Öffnung (16) vor dem Treiben des Stempeldornes örtlich erhitzt wird.

0 248 982

Fig.1

Fig.2

Fig. 3

Fig. 4

Schnitt A - B

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-2 529 464 (MIKROPUL GESELLSCHAFT FÜR MAHL- UND STAUBTECHNIK) <br> * Anspruch 1; Figur 2 * <br> --- | 1 | B 01 D 46/04 |
| A | AT-A- 377 711 (A. SCHEUCH) <br><br> * Figur 3 * <br> --- | | |
| A | FR-A-2 397 788 (S.T.E. S.D.G.) <br> * Anspruch 1; Figuren 2-4 * <br><br><br> ----- | 1,5 | |
| | | | **RECHERCHIERTE SACHGEBIETE (Int. Cl.4)** <br><br> B 01 D 46/00 <br> B 05 B 1/00 |

Der vorliegende Recherchenbericht wurde für alle Patentansprüche erstellt.

| Recherchenort | Abschlußdatum der Recherche | Prüfer |
|---|---|---|
| BERLIN | 01-09-1987 | BERTRAM H E H |